# EUROPEAN PATENT APPLICATION

(11) **EP 4 614 634 A1**
(43) Date of publication of application: **10.09.2025**
(21) Application number: 24382234.3
(22) Date of filing: 04.03.2024
(51) Int. Cl.: H01M 8/18

(54) **AN IRON ELECTROLYTE, ITS PROCESS OF OBTAINMENT AND IRON REDOX FLOW BATTERY COMPRISING SAID ELECTROLYTE**

(71) Applicant: Consejo Superior De Investigaciones Científicas, 28006 Madrid (ES)
(72) Inventor: Concheso Álvarez, Alejandro, Oviedo (ES); González Arias, Zoraida, Oviedo (ES); García Rocha, Victoria, Oviedo (ES); Blanco Rodríguez, Clara, Oviedo (ES); Santamaría Ramírez, Ricardo, Oviedo (ES); Menéndez López, Rosa, Oviedo (ES); Granda Ferreira, Marcos, Oviedo (ES); Álvarez Rodriguez, Patricia, Oviedo (ES); Barreda García, Daniel, Oviedo (ES)
(74) Representative: Pons IP

(57) **Abstract**

The invention relates to a new electrolyte involving iron salts to be used as anolyte and/or catholyte in an all-iron hybrid redox flow battery. Said electrolyte, as well as iron salts in high concentration, comprises various additives that grant key properties such as stability, balanced pH, and ionic conductivity (needed to avoid salt precipitation), and also inhibit H₂ evolution/generation thus enabling good quality iron platting.

Therefore, the field of the invention is the iron redox flow battery industry.

## Description

The invention relates to a new electrolyte involving iron salts to be used as anolyte and/or catholyte in an all-iron hybrid redox flow battery. Said electrolyte, as well as iron salts in high concentration, comprises various additives that grant key properties such as stability, balanced pH, and ionic conductivity (needed to avoid salt precipitation), and also inhibit H₂ evolution/generation thus enabling good quality iron platting.

Therefore, the field of the invention is the iron redox flow battery industry.

### BACKGROUND ART

Electrochemical energy storage devices are considered key systems due to the massive implementation of energy generation systems from renewables, which in turn need those devices to optimize their efficiency.

The main advantage of redox flow battery technology is that power and energy are uncoupled which many other electrochemical energy storage approaches do not offer. This provides a huge design flexibility thus enabling power ratings ranging from kW to MW. These advantages open up opportunities for stationary energy storage applications which are mostly dominated by the most known Li-ion batteries which, in turn, offer less lifetime, safety issues, and less flexibility in power and energy outputs. A redox flow battery is similar to other secondary batteries, but its main uniqueness is that the energy is not stored on the electrode materials but on the electrolytes outside the cell.

In a redox flow battery, a series of requirements are essential for the two electrolytes so that the battery can operate correctly and efficiently. It is necessary that the iron salts be as concentrated as possible to achieve a high energy density, and it is also necessary that the ionic conductivity of the electrolyte be as high as possible to minimize the internal resistance of the cell, avoiding internal current losses that penalize its overall efficiency. Ionic conductivity is achieved by dissolving the iron salts themselves, although it may be convenient to use other substances that allow its value to be increased without negatively altering the electrochemical reactions. It is also essential that the electrolytes are stable over a wide range of temperatures and under the working conditions used in the battery. In this particular case where iron salts are used in high concentrations, there are several strategies that can be followed to achieve this goal. One of them is to control the pH of the supporting electrolyte since this plays an essential role in the solubility of iron salts, especially Fe3+. It is convenient to use relatively acidic media in the positive electrolyte since high concentrations of Fe³⁺ are reached during charging. However, the situation in the negative electrolyte is more complex since very acidic media provokes the hydrogen evolution reaction (which is thermodynamically more favourable) but makes iron plating on the negative electrode difficult. Therefore, it is advisable to use a less acidic pH, although a higher pH value favors the precipitation of Fe³⁺ migrated through the membrane or formed by oxidation of Fe²⁺ with oxygen dissolved in the electrolyte. Therefore, a balance must be sought in the selected pH to avoid undesirable processes and use additives that avoid pH changes. Another strategy is to use additives that can form complexes with iron salts, helping to keep them in solution (in both electrolytes), but without preventing plating on the negative electrode. Additives capable of forming complexes with iron can be found in ionic or molecular form and can be used in one or both half-cells, in the same or different concentration.

It may also be important that the electrolytic medium, in both half-cells, is maintained in a reducing environment that prevents the spontaneous oxidation of Fe²⁺ to Fe³⁺, thus avoiding precipitation problems and/or loss of efficiency. The most common oxidizing agent that can be found in the medium is atmospheric oxygen dissolved in the electrolyte, so this can either be purged with an inert gas such as nitrogen or argon, eliminated from the medium using reducing additives, or use both strategies simultaneously on one or both electrolytes of the battery.

A final additive that can be used in the negative electrolyte is a substance that facilitates the formation of a homogeneous and smooth deposit of metallic iron, thus avoiding its fracture and the consequent loss of cell efficiency. This additive can be combined with other operating strategies that also improve the quality of this deposit, such as working at the appropriate temperature and/or using optimal current densities for the formation of deposits.

Despite the operation of the battery is directly related to the optimum performance of its different elements, is the nature of the electrolyte that sets the battery type. In the last decades, different redox flow batteries have been developed such as the Fe/Cr ones which were commercialized to some extent. These batteries used a Cr²⁺/Cr³⁺ solution in the negative half-cell while there was a Fe²⁺/Fe³⁺ solution in the positive one. The development of those batteries was brief due to membrane issues, as it was not possible to keep apart both electrolytes.

To minimize the problems of species mixing/cross-contamination through the membrane, redox flow batteries containing species of the same nature in both half-cells have been developed, thus ensuring that transferring species from one half-cell to another only means loss of efficiency, but not its loss of functionality.

Iron salts are an interesting alternative to be considered as electrolyte as this metal is homogeneously distributed along the planet, presents low toxicity, and is much more abundant and therefore cheaper than other metals. To date, the development of all-iron redox flow batteries is focused on hybrid redox flow batteries. The reactions on the positive electrode take place as in a conventional redox flow battery (redox reactions are developed on the electrode/electrolyte interface while the ions are in the solution). However, on the negative electrode, the redox reaction during the charge step leads to a plate out of Fe⁰ on its surface that must be stripped during the discharge as described in the following reactions:
Battery charge
   Positive half cell: 2Fe²⁺ - 2e⁻ → 2Fe³⁺
   Negative half cell: Fe²⁺ + 2e⁻ → Fe⁰
Battery discharge
   Positive half cell: 2Fe³⁺ + 2e⁻ → 2Fe²⁺
   Negative half cell: Fe⁰ - 2e⁻ → Fe²⁺

These two sets of half-reactions make it clear that the redox flow battery works as a hybrid battery, since in the negative half-cell the deposition of metallic iron occurs during charging (a process known as plating) and its subsequent redissolution during discharge (a process which is known as striping). Therefore, the necessary requirements for the two battery half-cells are very different, not only due to the different nature of the reactions related to them but also in this case of hybrid flow batteries, because on one electrode (the positive) reactions occur in solution, while on the negative one the deposit/redissolution of a solid deposit occurs.

This fact is an important challenge in hybrid redox flow batteries and a substantial difference with respect to conventional ones. However, these all-iron hybrid batteries are relevant, and some commercial examples can be found. To achieve full development of these hybrid batteries there are a number of technical problems to be solved so that their efficiency and durability can be optimized.
- The redox reactions at the positive electrode, where the electrolyte species are oxidized and reduced from Fe²⁺/Fe³⁺ and Fe³⁺/Fe²⁺, display fast kinetics at +0.77V vs NHE. It is possible to achieve high concentrations of iron salts at very low cost, for instance, compounds like iron chlorides are common. However, iron salts in which Fe³⁺ is present do precipitate as hydroxides if their pH is not acidic enough (pH values below 2).
- Iron oxides and/or hydroxides can precipitate over the positive electrode's surface thus blocking its electrochemically active surface because of their low conductivity and passivation of the electrode's surface.
- The anolyte composition is based on Fe²⁺ salts which during charge plate out the surface of the electrode. The potential of this redox reaction is -0.44V vs. NHE. In acid media, this reaction and the H₂ evolution reaction do compete thus reducing the overall efficiency. The optimum pH in this half-cell (3 to 6) is quite high, which is rather different from the optimum value at the positive half-cell.
- In addition to the technical problems mentioned above the plate out of iron and its stripping do show slow kinetics, therefore limiting the power of the battery. If the plating is too fast it can break down and detach from the electrode's surface thus compromising the efficiency and durability of the cell. Achieving high deposition currents is a critical issue in this kind of battery.
- The membrane may allow iron ions to flow from one half-cell to the other which is especially problematic if Fe³⁺ passes from the positive to the negative half-cell, which operates at a higher pH therefore favouring the hydroxides precipitation. This would end up in membrane saturation and an increase in the resistance of the cell.

### SUMMARY OF THE INVENTION

The present invention discloses a novel composition of a redox flow battery electrolyte based on iron salts, but they also contain different additives to favor the interaction with the electrode's surface, to enhance membrane performance, and/or to maintain electrolyte stability at the operation conditions. The electrolytes in each half-cell can be the same or different, but ideally the use of the same composition in both is recommended so that the transfer of species through the membrane due to concentration gradients is minimized. The additives used for the electrolyte composition can be classified by their role as:
1. Additive type 1 or first additive: Ionic conductivity modifier thus minimizing cell resistance.
2. Additive type 2 or second additive: Half-cell or whole-cell pH controller
3. Additive type 3 or third additive: Species forming complexes with iron species to avoid Fe (OH)3 precipitation or to control the kinetics of the redox reaction and increase the membrane's selectivity.
4. Additive type 4 or fourth additive: Reductant agent, to avoid the spontaneous Fe2+ oxidation that decreases overall cell efficiency and diminishes electrolyte stability.
5. Additive type 5 or fifth additive: Inhibitor of H2 evolution reaction
6. Additive type 6 or sixth additive: Iron plating rate modifier

To achieve the best electrolyte composition, in addition to the iron salt, one or several additives can be used in each half cell or in both, each of them at an optimum concentration.

It is feasible that one additive can achieve more than one role in the electrolyte's composition and those additives can be combined, at the same concentration or different, in each half-cell but ideally, a universal electrolyte composition is searched out.

The present invention comprises the composition of electrolytes to be used as anolytes and catholytes in an iron hybrid redox flow battery. A redox flow battery constructed with those electrolytes can reversibly store energy at a high efficiency. Moreover, these electrolytes must maintain low cost and compete with other electrolytes developed for all iron batteries in terms of long-term stability, low hydrogen production, and providing high energy and power densities.

A first aspect of the present invention related to an electrolyte for all-iron redox flow batteries, characterized in that it comprises:
- at least Fe⁺² cations, or at least a Fe⁺² and a Fe⁺³ cations, in a concentration ranging from 0.05M to 5M;
- at least a first additive to increase the ionic conductivity of the electrolyte, selected from chlorides, sulphates and nitrates of Li⁺¹, Na⁺¹, K⁺¹, NH₄⁺¹, Ca⁺², Mg⁺², preferably chlorides, and any combination thereof in a concentration ranging from 0.5 M to 5 M, preferably from 1.0 M to 3.0 M;
- at least a second additive for pH regulation, selected from boric, phosphoric, ascorbic, malonic, malic acid, citric acid, and any combination thereof, in a concentration ranging from 0.001 M to 1M;
- at least a third additive for complexing iron species of iron salts in order to avoid precipitation of hydroxides selected from ethylenediaminetetraacetic acid (EDTA) or its sodium salts, sodium hexametaphosphate, tartaric acid, citric acid, ammonia or ammonium salts, in a concentration ranging from 0.001 M to 0.5M; and
- at least a fourth additive as an antioxidant or reductant agent, selected from sulphur dioxide or formaldehyde, in a concentration ranging from 0.001 M to 1.0 M.

The advantages of this invention are that the only active species involved in the charge/discharge of the battery are the iron cations that can be prepared at different concentrations and can participate in different redox reactions, being developed on the positive electrode the oxidation from Fe²⁺ to Fe³⁺ during charge and the inverse during discharge and the reduction of Fe²⁺ to Fe⁰ on the negative electrode during charge and the inverse redox process during discharge. The positive electrolyte, in addition to having iron salts at high concentration and showing stability, may contain an additive capable of maximizing the media ionic conductivity thus minimizing the half-cell resistance and maximizing the whole-cell efficiency. The negative electrolyte in addition to the iron salts may also contain an additive that increases the media ionic conductivity aiming the same goal as in the positive half-cell. The additive can be the same or different and can be used in the same or different concentrations.

The pH of the electrolyte is key for ensuring the stability of iron salts and for avoiding their precipitation as hydroxides or similar compounds. Those precipitates could damage the cell performance by blocking the membrane or obstructing flow channels, thus reducing the cell efficiency. Therefore, in the positive electrolyte additives can be added to keep the pH under a controlled range of values, thus avoiding the precipitation of Fe³⁺ salts, which are the most problematic. In the negative electrolyte, it is also important to keep the pH under control but for different reasons. The main issue to be controlled is the H₂ evolution reaction and to enhance the plating/stripping of Fe²⁺/Fe⁰, and finally to avoid Fe³⁺ ions precipitation if they would be present in the half-cell. The additives used for pH control in the positive and negative half-cells can be the same or different and can be used in the same or different concentrations. The pH to keep in each half-cell can also be the same or different but as a general rule, it is accepted that the positive half-cell works better at acidic pH while the negative can perform better at a less acidic pH. In the negative half-cell, the appropriate additives dissolved in the electrolyte can increase the overpotential of the H₂ evolution reaction thus favouring the iron plating and keeping the efficiency of the cell high. Additives capable of regulating the pH of the catholyte and the anolyte (additive type 2). Additives that can form a complex with iron species present in the electrolyte solution can be used, preferentially complexing Fe²⁺, but also Fe3+ or both indistinctly. Those additives can increase the solubility and stability of iron salts, enabling higher concentrations and therefore increasing the electrolytes' energy density. In the positive electrolyte, complexes can be formed with the two-iron species (Fe²⁺ and Fe³⁺), increasing their solubility and stability, as long as the formed complexes do not interfere with the kinetics of the redox reactions, which could then decrease the power of the battery. In the negative electrolyte, the additives must complex the Fe²⁺ species but also should not interfere with the kinetics of the plating/stripping of metallic iron. This additive (third) is used for the positive half-cell electrolyte can be the same as in the negative one or can be different and can be used in the same or different concentrations. to avoid hydroxides precipitation and increase stability, therefore enhancing the energy density. Those additives can be used in the anolyte and/or the catholyte, using the same substance or different in the same or different concentration. These substances called complexing agents with iron salts can enable the presence of redox species in their appropriate oxidative valence, thus increasing stability and avoiding the precipitation of iron salts and enhancing energy density. These additives can be used in the anolyte and catholyte using the same or different substance in each case and with the same or different concentration. The complexing agents of Fe³⁺ act with different mechanisms as coordination compounds and chelating agents depending on the number of electronegative atoms (donors), one or more than one. These additives have to be chosen in such a way that they do not negatively affect the kinetics of the redox reactions involved in the battery operation, especially the sluggish reaction involved in the iron plating and striping.

Antioxidant or reductant additives can be used with a double role. In the positive electrolyte, they are used to keep the electrolyte free of oxidizing agents, such as oxygen from the air. In the negative electrolyte, they may be used similarly to avoid the oxidation of Fe²⁺ to Fe³⁺ thus avoiding its precipitation due to the less acidic character of this electrolyte. These additives can be used or not in combination with other species to avoid the presence of oxidizing agents, such as the purging of inert gases (N₂, Ar) in the electrolyte media. More specifically Antioxidant or reductant additives are used in order to keep a reductant chemical environment in the electrolytic media which can be used in both anolyte and catholyte in the same conditions or independently in each half-cell. The aim of these additives is to avoid the spontaneous oxidation of Fe²⁺ to Fe³⁺, which breaks the thermodynamic equilibria among the two half-cells and could end up in iron (III) hydroxide precipitation. In particular, the incorporation of a new additive type 4 (formaldehyde or SO₂) in concentrations of between 0.01M and 1.0 M produces an appreciable increase in the plating/striping signal. The electrolyte without additive 4 shows very little signal in the plating/striping areas. The presence of formaldehyde makes the signal of plating/striping reaching values of current close to 200 mA/cm², but the presence of SO₂ allows to reach current intensity values much higher, over 540 mA/cm². The values of current intensity reached by the negative electrode are compared to the positive one. Although the negative signal is still a bit smaller than the positive one is they are quite comparable, therefore it can bring a huge progress in the battery performance. This formulation enables a completely unexpected behavior and for the first time shows almost equivalent behavior for positive and negative electrodes. Furthermore, the formaldehyde and the SO₂ has also a very positive impact in cell coulombic efficiency as the value of the cell with no reducing agents has an efficiency lower than 70 %, that increases to 90 % in the case of adding formaldehyde and 91 % when SO₂ is used as additive. These values clearly reflect that these additives also have a role inhibiting hydrogen evolution, and therefore also act as additive type 5. Furthermore, these additives can also be considered type 5, as they also show an excellent activity in increasing the plating/stripping rate.

The original electrolyte is very stable; however, the iron oxidation-reduction signal is very little intense. When adding an additive type 4, that is, a reductant additive, the plating/striping signal becomes much more intense. This example demonstrates that a combination of additives can be optimized to substantially improve electrochemistry performance while preserving solution stability.

All the above-mentioned additives can be used in the positive electrolyte simultaneously or not and the mixture can be composed of some of them or all of them in variable concentrations in each case. Similarly, in the negative electrolyte, a combination of these additives can be used, and the composition can be a combination of them or only some of them in similar or different concentrations for each one. These electrolytes in the appropriate formulation will be combined with the appropriate electrode material in each half-cell so that the desired redox reactions take place at a high rate and the undesired ones are inhibited, all keeping stable electrolytes during the charge and discharge cycles of the battery.

Thus, a preferred embodiment of the present invention the Fe⁺² and/or Fe⁺³ cations independently of each other are provided by a hydrated or anhydrous chloride, sulphate and nitrate iron salt, more preferably the iron salt is a chloride iron salt. The advantage of chlorides is that they are more abundant, soluble, and have other advantages such as forming complexes with iron and may inhibit hydrogen generation.

Hydrated or anhydrous iron chloride salts (FeCl₂ and FeCl₃) are used in the catholyte, and hydrated or anhydrous Fe²⁺ chloride salts (FeCl₂) in the anolyte as charge transport agents. These salts are chosen due to their high solubility thus allowing high current densities to be easily achieved. However, other iron compounds could be used as a charge source as far as they present similar or higher solubility. The concentration range is from 0.05 M to 5.0 M. The concentration can be the same or different for each half-cell electrolyte.

In another preferred embodiment the at least one third additive is sulfur dioxide (SO₂) and/or formaldehyde (CH₂O).

In another preferred embodiment of the electrolyte, which additionally comprises at least a fifth additive, for minimizing or suppressing the H₂ evolution reaction, selected from Bi³⁺, As³⁺, Sb³⁺, In³⁺, and Tl⁺¹ salts, in a concentration ranging from 1 mM to 100 mM.

Fifth additives, to inhibit H₂ evolution reaction, in the negative half-cell can be used as this reaction competes with the iron plating, thus reducing significantly the cell efficiency. Avoiding hydrogen evolution reaction not only helps to increase cell efficiency, but also increases safety uses as hydrogen gas is not produced.

The role of these additives can be enhanced if they are used simultaneously with carbon-based materials in the electrode capable of slowing down the H₂ evolution reaction, such as some carbon felts with specific surface treatments. Those treatments can be oxidative surface treatments under strong acids (such as nitric or sulfuric acid or a combination of both), oxidative thermal treatments between 300-700°C, or other oxidative treatments with similar substances. It has also been described that anionic substances used in high concentrations can be attached to the carbon surface and inhibit the H₂ evolution reaction. The carbon-based material selected from carbon felts, carbon paper, 3D carbon structures containing graphite particles, carbon nanotubes, carbon black, etc, can also be use as suitable electrode materials, These substances include anions such as chlorides (Cl⁻), which in turn are used with other roles in this invention. On the other hand, in the positive half-cell they would be neutral.

In another preferred embodiment of the electrolyte, which additionally comprises at least a sixth additive to improve the iron plating quality on the electrode, selected from Mn²⁺ salts, in a concentration ranging from 0.003 M to 0.030 M.

Sixth additive, to increase the quality of the Fe⁰ deposit, on the negative half-cell electrode can be used. Despite the pH of the media and the presence of binders that can impact the deposit's type, the specific additive can be added in order to facilitate the Fe⁰ deposit free of cracks and dendrites, thus increasing the reversibility of the plating/stripping process. The ideal additive must be able to allow a high rate of plating/striping reaction, a parameter that up to now has limited the performance of the cell due to the slower kinetics present in the negative half-cell of the hybrid all Iron redox flow batteries. The additive composition can be single or multiple and the range of concentration of each component can be the same or different. On the other hand, in the positive half-cell they would be neutral.

In another preferred embodiment the electrolyte has a pH below 5, preferably between 2 and 5. In another preferred embodiment the electrolyte has a pH below 2.

A pH range from 2 to 5 is recommended to avoid the H₂ evolution reaction, but at the same time, it cannot be that high to avoid iron hydroxide precipitation which in turn can be deposited into the ionic membrane if it is not as selective as desired. The substances that can achieve a stable pH range are varied, depending on their nature (pKa) and their compatibility and interaction with the rest of the components. The pH value of each half-cell electrolyte can be the same or different, depending on the desired value in each half-cell. The pH of the electrolyte in a positive half-cell (catholyte) is advisable to be acid, such as values below 2. This can favor the stability of Fe³⁺ salts. pH values below 2 are recommended to achieve stable electrolyte solutions and suitable development of redox reactions (Fe²⁺/Fe³⁺). The pH requirements of the electrolyte in the negative half-cell (anolyte) are more demanding.

In another preferred embodiment the electrolyte is an anolyte with Fe⁺² cations and/or a catholyte with Fe⁺² cations or with Fe⁺² and Fe⁺³ cations.

The positive electrolyte (catholyte) main component is a soluble Fe²⁺ salt, such as iron (II) chloride, even though it can also contain variable amounts of Fe³⁺ salts. The electrolyte must show certain key properties such as stability (not precipitating with time) and a high concentration of iron salts.

The negative electrolyte (anolyte) has only Fe²⁺ salts as the main component and the presence of Fe³⁺ must be avoided. The negative electrolyte must also comply with the stability and high concentration of Fe²⁺ requirements.

A second aspect of the present invention is a method for the preparation of an electrolyte according to any of claims 1 to 9, comprising the steps of:
a) preparing an aqueous solution of at least a hydrated or anhydrous Fe⁺² salts or hydrated or anhydrous Fe⁺² and a Fe⁺³ salts, preferably the salts are selected from chloride, sulphate and nitrate iron salt, even more preferably the iron salt is a chloride iron salt;
b) adding to the prepared aqueous solution obtained in step (a) at least a first additive compound, at least a second additive compound, at least a third additive compound, and at least a fourth additive;

A preferred embodiment of the method of the present invention which comprises additionally dissolving at least a fifth additive, as described above, and/or at least a sixth additive, as described above.

A third aspect of the present invention is an iron redox flow battery comprising a negative electrode, a positive electrode and the electrolyte described above.

In a preferred embodiment the negative electrode is made of carbon, iron, copper, or their combinations. Said electrodes helps to inhibit the Hydrogen Evolution Reaction.

In another preferred embodiment the positive electrode is made of modified carbon fiber felts, carbon papers, or 3D structures made of carbon, preferably graphite, carbon nanotubes, carbon black, or their combinations.

In another preferred embodiment the membrane of the battery is made of cation-exchange membranes, which contain negatively charged groups fixed to the polymer matrix, and anion-exchange membranes, which contain positively charged groups fixed to the polymer matrix.

In another preferred embodiment the cation-exchange membrane is selected from Nafion membranes, preferably N-115, N-117, N1110, NR-211 and NR-212, more preferably NR-212, and Perfluorinated cation-exchange membrane, preferably FS-940 y FS-930.

In another preferred embodiment the anion-exchange membrane is selected from Fluorinated anion-exchange membrane, preferably FAP-450 and FAPQ- 330, more preferably FAP-450.

The term "suitable membrane material" as used herein refers to any cationic or anionic membrane that allows ion transportation at high rate but minimizes the transport of underside species through it, to maintain high coulombic efficiencies and high capacitances during long term cycling.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings and sequence listing are provided by way of illustration and are not intended to be limiting of the present invention.

### BRIEF DESCRIPTION OF THE DRAWINGS

**Fig. 1****.** Schematic diagram of a redox flow battery
**Fig. 2****.** Operation in the flow cell. (a) Charge/discharge curves during a cycle and (b) Cell coulombic efficiency during cycling
**Fig. 3****.** CVs were recorded using the same electrolyte formulation, at pH values between 0 and 4.
**Fig. 4****.** Positive and negative electrode cyclic voltammograms recorded in three-electrode cells, using the same electrode and different electrolyte formulations with different additives: 3.0 M MgCl2 labelled as (a), 2.99 M NaCl + 0.01 M NH4Cl labelled as (b), and 3.0 M NaCl + 0.1 M Glycine labelled as (c),
**Fig. 5****.** CVs recorded using the original electrolyte and the one modified with 0.010 M formaldehyde or with 0.01 M SO2 in aqueous solution (a) and positive and negative electrode cyclic voltammograms recorded in three-electrode cells using the same electrode and the electrolyte containing SO2 as additive 5 (b).

### Examples

### Example 1. Example of stable electrolyte formulation

Different solutions of FeCl₂ with various additives have been prepared (by simply dissolving all the components) and stored in closed jars for a period of time to check the stability of the electrolyte. Different pH values, adjusted with concentrated solutions of NaOH and HCl, have been used in each solution and different additives have been used to study whether they inhibit the precipitation of Fe³⁺ salts. The results are shown in Table 1.1.

**Table 1.1. Electrolyte formulations**

| [FeCl2], M | pH | Additive | Additive type | Stability over time |
|---|---|---|---|---|
| 0.5 | 0 | NaCl | 1 | Good |
| 0.5 | 1 | NaCl | 1 | Good |
| 0.5 | 2 | NaCl | 1 | Bad |
| 0.5 | 2 | NaCl, NH₄Cl | 1,4 | Regular |
| 0.5 | 2 | NaCl, Citric acid | 1,2,4 | Good |
| 0.5 | 2 | NaCl, Citric acid, Na₂SO₃ | 1,2, 4, 5 | Good |

Electrolytes prepared at pH=0 and pH=1 are stable over time, as after 10 weeks they remain perfectly stable. It is expected that these electrolytes with such a low pH will not be adequate to perform in the negative half-cell and the hydrogen evolution reaction will be predominant. However, formulations at pH=2 show precipitates after only 24 hours from preparation. Since very low pH values are not desirable in the negative electrolyte, as a lot of H₂ can be generated under these circumstances, solutions have been prepared in such a way that, in addition to FeCl₂, they contain additives capable of forming complexes with iron, such as organic acids, ammonium salts, etc. to analyze their stability.

As it can be seen from Table 1.1 electrolytes prepared at pH=2 with 3.0 M NaCl, and 0.1 -0.5 M citric acid are stable and do not generate any precipitate, but the same solution prepared without citrates showed a reddish precipitate of Fe(OH)₃. The subsequent addition of Na₂SO₃ does not modify previous stability. Therefore, the presence of citrates at an adequate concentration seems to be the key to achieve the stability of the electrolytes.

### Example 2. (Cycling example of stable electrolyte formulation)

Two identical electrolytes (anolyte and catholyte) have been prepared to facilitate the operation of the membrane in the flow cell. Both of them contain FeCl₂ with a concentration of 0.5 M, and NaCl as a type 1 additive with a concentration of 3.0 M in each of the electrolytes.

The pH value of the anolyte and catholyte has been initially adjusted to 2, with concentrated solutions of NaOH and HCl, and a type 2 additive has been added to avoid further pH variations. In this specific case, citric acid was used in a concentration of 0.01M. The citric acid is also acting as type 3 additive as it can form complexes with both Fe cations, even at that small concentrations. In addition to previous additive, a 0.01 M of NaHSOs has also been added as a type 4 additive.

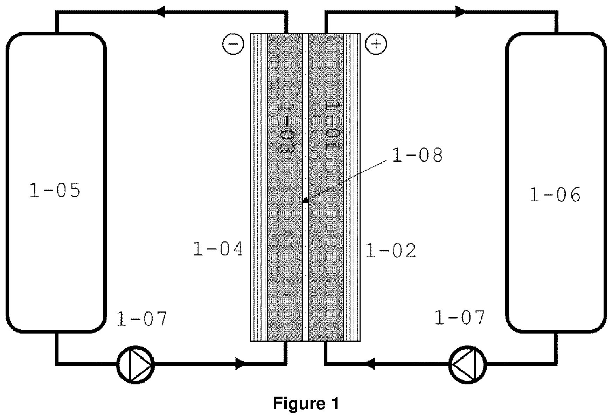

In a hybrid all-iron redox flow battery like the one presented in Figure 1 of this invention, two carbon-based felts with modified surfaces are used as electrodes, a 0.05 mm thick Nation^{®} 212 as membrane and a suitable pumping system allows feeding the electrolytes containing iron salts to each half-cell, each with the flow that is considered optimal. In the redox flow battery (Fig. 1) the positive electrode **1-01** is located (in the positive half-cell **1-02**) and the negative electrode **1-03** is placed in the negative half-cell **1-04.** Through this electrochemical device (which may contain a stack of cells) the electrolytes (both the anolyte and the catholyte) flow. The electrolytes are stored in separate tanks outside the battery (anolyte tank **1-05,** catholyte tank **1-06**) and connected to it through pipes and driven by pumps (**1-07**) that can regulate their flow independently. Each of the electrolytes, after passing through its own electrochemical half-cell and being totally or partially transformed, returns to its original tank. The two half-cells are separated by a polymeric membrane (**1-08**) that can be cationic or anionic, which keeps both half-cells electrically isolated, although it allows the flow of specific ions for the cell to operate correctly.

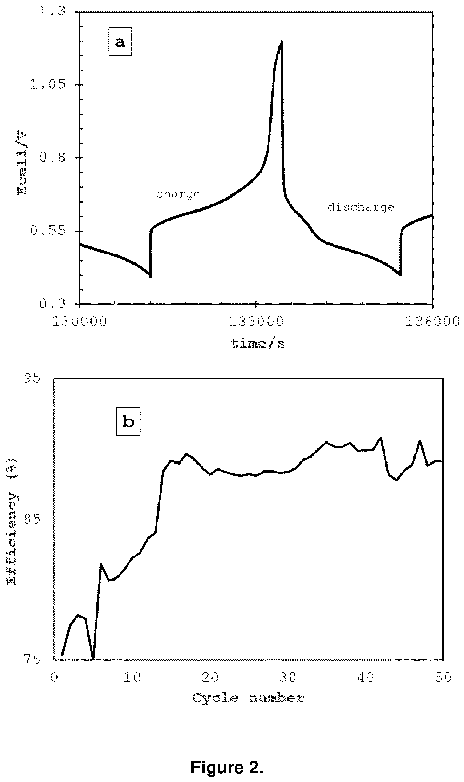

The cell has been cycled at room temperature at 25 mA/cm² in a voltage window between 0.4 and 1.3 V. The profile of a charge-discharge cycle is shown in Figure 2 (a) and the average coulombic efficiency during cycling is shown in Figure 2 (b) which, once the cell is stabilized, remains between 88 and 91%.

The performance of the battery is considered satisfactory, with efficiency and charge losses close to 10% of the initial value, which demonstrates that the appropriate combination of additives can allow the development of iron electrolytes that work competitively in an all-iron hybrid redox flow battery. During all the charge-discharge processes the electrolyte remains transparent until the respective changes in color depending on the dominant species in any stage of charge, but no solid precipitates are observed at any time.

The electrolyte initially shows a pH of 2.02 and an ionic conductivity of 206 S/cm. After cycling, pH was measured again in the anolyte and the catholyte, decreasing to 1.80 in the anolyte and remaining the same in the catholyte. Regarding ionic conductivity, there are no notable changes in both electrolytes, demonstrating the effectiveness of the various additives.

### Example 3. (Examples of the selection of additives influence on plating)

The use of certain experimental variables such as pH or the correct selection and compatibility of additives is very important for the stability of the electrolyte, but it can also significantly impact on the electrochemical performance of each half-cell, a phenomenon that can be followed by cyclic voltammetry (CV) in 3-electrode cells. The three-electrode cell used in these experiments is a conventional commercial cell consisting of a working electrode (WE), which in these examples is a modified carbon felt, a counter-electrode (CE), which is a graphite rod, and a reference electrode (RE) of Ag/AgCI/3.5 M KCI. In this cell, the electrolyte is tested as catholyte or anolyte within the potential window considered using CV.

Example 3 uses the same formulation that the one defined in example 2 and it is demonstrated that the adjustment to different pH values has a high influence on the plating process (reduction of Fe²⁺ to Fe⁰).

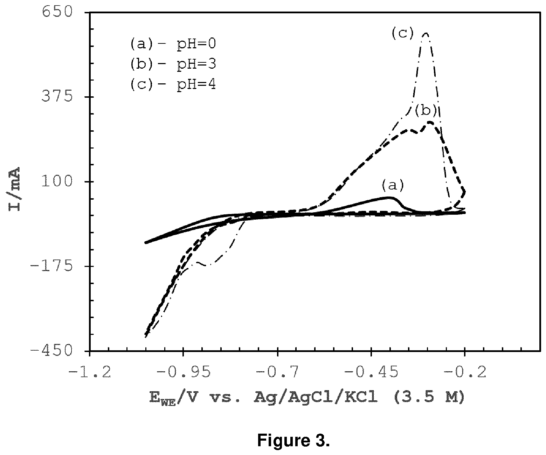

Figure 3 shows the cyclic voltammograms (CVs) recorded using the electrolyte defined in Example 2 but adjusting the pH to values between 0 and 4. At pH=0 the plating of metallic iron is very weak, predominating the evolution of hydrogen, so in these conditions, the anolyte is not useful in a redox flow battery. On the other hand, when increasing the pH value, the hydrogen evolution signal decreases and increases the signal of the desired plating/striping process. However, despite at pH values of 3-4 the plating performance is improved, an important issue arises as these solutions are not stable, quickly showing iron precipitates, so they are not useful in a redox flow battery either.

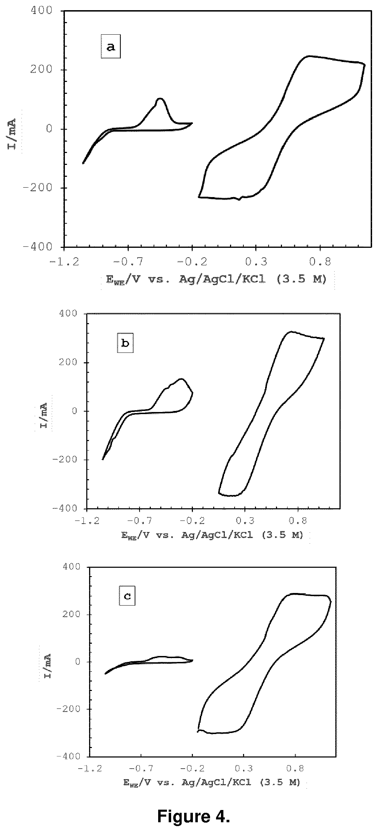

In Figure 4, the behaviour of three different electrolyte formulations is tested using the same electrochemical technique. The electrolyte containing 0.5 M FeCl₂ and different additives (3.0 M MgCl₂ labelled as (a), 2.99 M NaCl + 0.01 M NH₄Cl labelled as (b), and 3.0 M NaCl + 0.1 M Glycine labelled as (c)), pH value is fixed as 2, where the solution is perfectly stable. It is observed that in the range where the electrolyte operates as a catholyte (positive potential window) a high-intensity and highly reversible signal is obtained for all the electrolytes, which indicates that under these conditions the electrolyte can be used satisfactorily in a redox flow battery. However, in the negative potentials range, where the electrolyte acts as an anolyte, the CV shape is very different for each electrolyte formulation. Best results are obtained in the composition shown in case b) but there is still a large difference between the performance obtained for the positive electrode and the obtained for the negative one, which seriously would limit the overall performance of the cell.

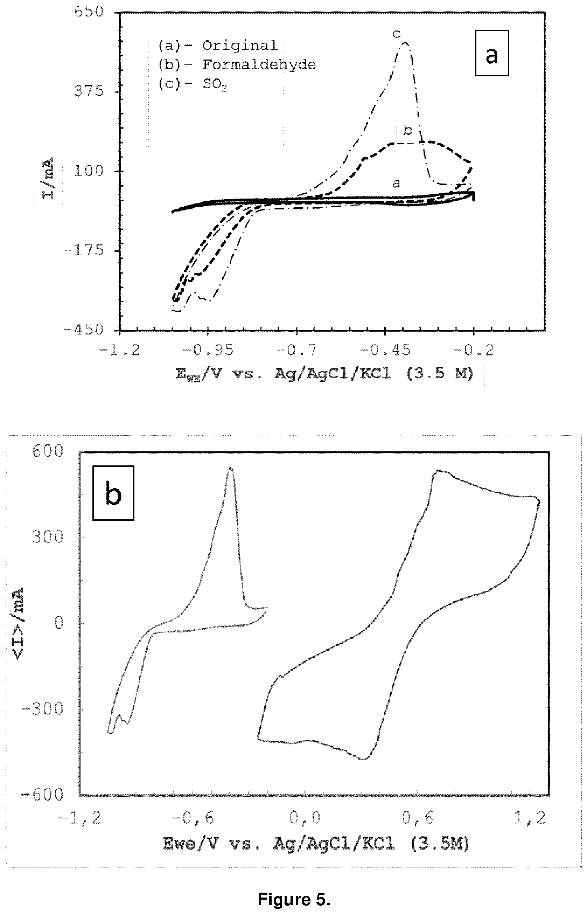

Finally, in Figure 5, the CVs shown are recorded using the same electrolyte formulation containing 0.5 M of FeCl₂ with additives type 1 (3.0 M NaCl) and types 2 and 3 (0.01 M citric acid, that play a double role in this example) and 4 adjusted to pH = 2, which has good stability. In Figure 3.3.a it is shown that the incorporation of a new additive type 4 (formaldehyde or SO₂) in concentrations of 0.01M provides a noticeable increase in the plating/striping signal. The electrolyte without additive 4 shows a very little signal related to the plating/striping processes. The presence of formaldehyde makes the signal of plating/striping reaching values of current intensity close to 200 mA, but the presence of SO₂ allows reaching current intensity values much higher, over 540 mA. Figure 3.3.b shows the values of current intensity reached by the negative electrode compared to the positive one. Although the negative signal is still a bit smaller than the positive one they are quite comparable, therefore it can bring a huge progress in the battery performance. This formulation enables a completely unexpected behaviour and for the first time shows almost equivalent behavior for positive and negative electrodes. Furthermore, the formaldehyde and the SO₂ have also a very positive impact in cell coulombic efficiency as the value of the cell described in (a), with no reducing agents, is lower than 70 %, increasing to 90 % when adding formaldehyde (b), and 91 % when SO₂ is used as additive (c). These values clearly reflect that these additives also have a role inhibiting hydrogen evolution, and therefore also act as additive 5. Furthermore, these additives can also be considered type 6, as they also show an excellent activity in increasing the plating/stripping rate.

The original electrolyte is very stable; however, the iron oxidation-reduction signal is very little intense. When adding an additive type 4, that is, a reducing additive, the plating/striping signal becomes much more intense. This example demonstrates that a combination of additives can be optimized to substantially improve electrochemical performance while preserving solution stability.

## Claims

1. An electrolyte for all-iron redox flow batteries, **characterized in that** it comprises:
• at least Fe⁺² cations, or at least a Fe⁺² and a Fe⁺³ cations, in a concentration ranging from 0.05M to 5M,
• at least a first additive to increase the ionic conductivity of the electrolyte, selected from chlorides, sulphates and nitrates of Li⁺¹, Na⁺¹, K⁺¹, NH₄⁺¹, Ca⁺², Mg+², preferably chlorides, and any combination thereof in a concentration ranging from 0.5 M to 5 M, preferably from 1.0 M to 3.0 M;
• at least a second additive for pH regulation, selected from boric, phosphoric, ascorbic, malonic, malic acid, citric acid, and any combination thereof, in a concentration ranging from 0.001M to 1M;
• at least a third additive for complexing iron species of iron salts in order to avoid precipitation of hydroxides selected from ethylenediaminetetraacetic acid (EDTA) or its sodium salts, sodium hexametaphosphate, tartaric acid, citric acid, ammonia or ammonium salts, in a concentration ranging from 0.001 M to 0.5M; and
• at least a fourth additive as an antioxidant or reductant agent, selected from sulphur dioxide or formaldehyde, in a concentration ranging from 0.001 M to 1.0 M.

2. Electrolyte according to claim 1, wherein the Fe⁺² and/or Fe⁺³ cations independently of each other are provided by a hydrated or anhydrous chloride, sulphate and nitrate iron salt.

3. Electrolyte according to claim 2, wherein the iron salt is a chloride iron salt.

4. Electrolyte according to any claims 1 to 3, which additionally comprises at least a fifth additive, for minimizing or suppressing the H₂ evolution reaction, selected from Bi³⁺, As³⁺, Sb³⁺, In³⁺, and Tl⁺¹ salts, in a concentration ranging from 1 mM to 100 mM.

5. Electrolyte according to any of claims 1 to 4, which additionally comprises at least a sixth additive selected from Mn²⁺ salts, in a concentration ranging from 0.003 M to 0.030 M.

6. Electrolyte according to any of claims 1 to 5, wherein the electrolyte has a pH below 5.

7. Electrolyte according to any of claims 1 to 6, wherein the electrolyte has a pH below 2.

8. Electrolyte according to any of claims 1 to 7, wherein the electrolyte is an anolyte with Fe⁺² iron species and/or a catholyte with Fe⁺² iron species or with Fe⁺² and Fe⁺³ iron species.

9. Method for the preparation of an electrolyte according to any of claims 1 to 8, comprising the steps of:
a) preparing an aqueous solution of at least a hydrated or anhydrous Fe⁺² salts or hydrated or anhydrous Fe⁺² and a Fe⁺³ salts;
b) adding to the prepared aqueous solution obtained in step (a) at least a first additive compound, at least a second additive compound, at least a third additive compound, and at least a fourth additive;

10. Method according to claim 9, wherein the salts are selected from chloride, sulphate and nitrate iron salt.

11. Method according to claim 10, which comprises additionally dissolving at least a fifth additive and/or at least a sixth additive.

12. An iron redox flow battery comprising a negative electrode, a positive electrode and the electrolyte according to any of claims 1 to 8.

13. Iron redox flow battery according to claim 12, wherein the negative electrode is made of carbon, iron, copper, or their combinations.

14. Iron redox flow battery according to claims 13 or 14, wherein the positive electrode is made of modified carbon fiber felts, carbon papers, or 3D structures made of carbon, preferably graphite, carbon nanotubes, carbon black, or their combinations.

15. Iron redox flow battery according to claims 12 to 14, wherein the membrane of the battery is made of cation-exchange membranes, which contain negatively charged groups fixed to the polymer matrix, and anion-exchange membranes, which contain positively charged groups fixed to the polymer matrix.
